(19) Europäisches Patentamt
European Patent Office
Office européen des brevets

(11) **EP 3 081 532 B1**

(12) **EUROPEAN PATENT SPECIFICATION**

(45) Date of publication and mention
of the grant of the patent:
**13.02.2019 Bulletin 2019/07**

(51) Int Cl.:
***C01B 39/24*** *(2006.01)*

(21) Application number: **13899055.1**

(22) Date of filing: **09.12.2013**

(86) International application number:
**PCT/CN2013/088875**

(87) International publication number:
**WO 2015/085462 (18.06.2015 Gazette 2015/24)**

(54) **METHOD FOR PREPARING NAY MOLECULAR SIEVE OF HIGH SILICA-ALUMINA RATIO AND PRODUCT THEREOF**

VERFAHREN ZUR HERSTELLUNG VON NAY-MOLEKULARSIEB MIT HOHEM KIESELERDE-TONERDE-ANTEIL UND PRODUKT DARAUS

PROCÉDÉ DE PRÉPARATION D'UN TAMIS MOLÉCULAIRE DE NAY PRÉSENTANT UN RAPPORT SILICE-ALUMINE ÉLEVÉ ET PRODUIT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.10.2016 Bulletin 2016/42**

(73) Proprietor: **Dalian Institute Of Chemical Physics, Chinese Academy of Sciences**
**Liaoning 116023 (CN)**

(72) Inventors:
• **YUAN, Danhua**
**Dalian, Liaoning 116023 (CN)**
• **DONG, Xinglong**
**Dalian, Liaoning 116023 (CN)**
• **XU, Yunpeng**
**Dalian, Liaoning 116023 (CN)**
• **LIU, Zhongmin**
**Dalian, Liaoning 116023 (CN)**
• **WANG, Kunyuan**
**Dalian, Liaoning 116023 (CN)**
• **HUANG, Wei**
**Dalian, Liaoning 116023 (CN)**

(74) Representative: **Witte, Weller & Partner**
**Patentanwälte mbB**
**Postfach 10 54 62**
**70047 Stuttgart (DE)**

(56) References cited:

CN-A- 1 736 867     CN-A- 1 736 867
US-A- 4 483 835     US-A- 4 483 835

• MIGNONI M L ET AL: "Nickel oligomerization catalysts heterogenized on zeolites obtained using ionic liquids as templates", APPLIED CATALYSIS A: GENERAL, ELSEVIER, AMSTERDAM, NL, vol. 374, no. 1-2, 1 February 2010 (2010-02-01), pages 26-30, XP026854602, ISSN: 0926-860X [retrieved on 2010-01-15]
• MA ET AL: "Synthesis of Sodalite in Room-temperature Ionic Liquid", GAODENG XUEXIAO HUAXUE XUEBAO - CHEMICAL JOURNAL OF CHINESEUNIVERSITIES, JILIN DAXUE, BEIJING, CN, vol. 27, no. 4, 30 April 2006 (2006-04-30) , pages 739-741, XP008181071, ISSN: 0251-0790
• LONGFENG ZHU ET AL: "High temperature synthesis of high silica zeolite Y with good crystallinity in the presence of N-methylpyridinium iodide", CHEMICAL COMMUNICATIONS - CHEMCOM., vol. 49, no. 89, 10 September 2013 (2013-09-10), page 10495, XP055358983, ISSN: 1359-7345, DOI: 10.1039/c3cc43974g
• MA, YINGCHONG ET AL.: 'Ionothermal Synthesis of Sodalite Microsphers' CHINESE JOURNAL OF INORGANIC CHEMISTRY vol. 26, no. 11, 30 November 2010, pages 1923 - 1926, XP008181084
• MA, YINGCHONG ET AL.: 'Synthesis of Sodalite in Room-temperature Ionic Liquid' CHEMICAL JOURNAL OF CHINESE UNIVERSITIES vol. 27, no. 4, 30 April 2006, pages 739 - 741, XP008181071

**Description**

TECHNICAL FIELD

The present invention pertains to high-silicon NaY molecular sieve synthesis field, and particularly to the synthesis of a NaY molecular sieve having a high crystallinity and a high silica-to-alumina ratio by using a short-chain alkylimidazolium ionic liquid as a template agent.

BACKGROUND ART

A molecular sieve is a hydrated porous crystalline aluminosilicate, which has a highly regular porous cage structure. NaY molecular sieve is a type of molecular sieve having a FAU topological structure, and is a molecular sieve having an ultra-cage structure formed by arranging β cages according to diamond structure. FAU type zeolite comprises X type and Y type, which are different from each other in the aluminum content, that is, silica-to-alumina ratios ($SiO_2/Al_2O_3$) are different. Generally, an X type zeolite has a silica-to-alumina ratio of approximately 2.2-3.0, while a Y type zeolite has a silica-to-alumina ratio of 3-5.

The Y type zeolite is one of main species used as catalysts and adsorption and separation agents, and is applied in the process of petroleum catalytic cracking industry, an emerging oil refining technique which has been developed since 1960s. As a main active component of a catalytic cracking catalyst, the silica-to-alumina ratio of Y molecular sieve plays a dominating role in the catalytic cracking performance, the distribution of products, and the stability of catalyst. The Y molecular sieve having a high silica-to-alumina ratio has the advantages such as high catalytic activity and good stability, and greatly improves the aspect of the entire catalytic cracking industry. At present, the USY type zeolite used industrially is a Y zeolite having a relatively high silica-to-alumina ratio obtained by subjecting raw powder of Y zeolite to treatments such as chemical dealuminzation and physical dealuminzation. However, this post-processing dealuminzation method is energy intensive and complicated in practical application.

Generally, a NaY molecular sieve is prepared by a method using a directing agent under a hydrothermal condition. Specifically, a Y type molecular sieve seed crystal is first prepared under a high-alkalinity environment; this seed crystal is then added to a mixed gel system for NaY synthesis. The Y molecular sieve obtained by this method typically has a silica-to-alumina ratio of about 5.5. The direct method for hydrothermally synthesizing high-silicon Y type zeolite ($SiO_2/Al_2O_3 > 6$) can avoid complicated procedure of post-processing, save a large amount of human resource and material resource, and reduce the pollution to the environment. At the meanwhile, there is a better catalytic effect due to a complete crystal structure and a uniform chemical distribution. Therefore, it has a great significance to explore a direct method for synthesizing high-silicon Y type zeolite.

In 1982, U.S. Patent No. 4333859 disclosed a FAU polymorph designated as CSZ-3 having a silica-to-alumina ratio of greater than 6, which was obtained under a condition of using $Cs^+$ having a larger ion radius together with seed crystals. The product had the following composition: 0.8-0.95$Na_2O$:0.02-0.20$Cs_2O$:$Al_2O_3$: 5.0-7.0$SiO_2$:2-10 $H_2O$.

In 1987, U.S. Patent No. 4714601 disclosed a FAU polymorph designated as ECR-4 having a silica-to-alumina ratio of greater than 6, which was prepared by hydrothermal crystallization at 70-120°C using bis(2-hydroxyethyl)dimethyl ammonium ions or other alkyl quaternary ammonium salts having larger sizes as a template agent. For the initial gel mixture of this material, the molar ratio of silica to alumina was 4-20, and the molar ratio of water to alumina was 100-400.

In 1990, F. Delprato (Zeolites, 10 (1990) 546-552) directly hydrothermally synthesized a Y type zeolite having a silica-to-alumina ratio of 6-10 by using crown ether for the first time, demonstrating the possibility for directly hydrothermally synthesizing a high-silicon Y type zeolite in the presence of an organic template agent. Subsequently, it was reported in a few articles and patents in this respect (Zeolites, 13 (1993) 122-127; US 5273945; Zeolites, 15 (1995) 90-96). Although the crown ether has an excellent performance as a template agent, it is not suitable for practical production due to high price and high toxicity.

In 1990, U.S. Patent No. 4931267 disclosed a FAU polymorph designated as ECR-32 having a silica-to-alumina ratio of greater than 6, which was obtained by using tetrapropyl- and/or tetrabutyl ammonium hydroxide as a template agent. For the reaction mixture for preparing this material, the molar ratio of silica to alumina was 9-36, and the molar ratio of water to alumina was 120-500.

In 1993, F. Delprato (Zeolites, 13 (1993) 122-127) also synthesized a high-silicon Y molecular sieve having a silica-to-alumina ratio of about 7 by using polyethylene oxide (PEO) as a template agent, wherein PEO having a molecular weight of 2000-8000 was advantageous for obtaining a well crystallized Y molecular sieve. The gel composition ratio of this system was 10$SiO_2$:1$Al_2O_3$:2.4$Na_2O$:xPEO:140$H_2O$ (the weight ratio of $SiO_2$/PEO = 3), and the high-silicon Y molecular sieve may be obtained by hydrothermal crystallization at 100°C for 8 days.

In 1998, B. De Witte synthesized a high-silicon Y molecular sieve having a silica-to-alumina ratio of 6.2-6.6 by using inositol as a template agent (Microporous and Mesoporous Materials, 23 (1998) 11-22). The gel composition ratio of this system was 10$SiO_2$:1$Al_2O_3$:2.7$Na_2O$:0.5 inositol:140$H_2O$, and the high-silicon Y molecular sieve may be obtained by hydrothermal crystallization at 110°C for 8 days.

In 1998, U.S. Patent No. 5718593 disclosed that a Y molecular sieve may be directly formed and crystallized by using tetraethyl ammonium hydroxide, tetrapropyl ammonium hydroxide, or tetrabutyl ammonium hydroxide as a template agent and using a small amount of water in the system.

CN1736867A disclosed the preparation of a mesoporous Y molecular sieve by using 1-cetyl-3-methyl imidazolium bromide or 1-cetyl-3-methyl pyridinium bromide, a long-chain alkyl ionic liquid, as a template agent. It focused on the effect of the Y molecular sieve having a mesoporous structure on the catalytic activity, and did not relate to the content whether the silica-to-alumina ratio thereof was increased or not, compared to that of a Y molecular sieve synthesized by a conventional method without template.

The template agents previously used for synthesizing high-silicon Y molecular sieve are mainly quaternary ammonium salts, cyclic- or chain-type alcohols, ethers, etc. No NaY molecular sieve having a silica-to-alumina ratio of 6 or more and a high crystallinity is synthesized by using a less volatile short-chain alkylimidazolium ionic liquid as a template agent or a structure directing agent under a hydrothermal condition.

## SUMMARY OF THE INVENTION

In view of those described above, the silica-to-alumina ratio of Y molecular sieve has a crucial effect on its catalytic activity, and the inventors of the present invention experimentally find that by selecting an appropriate short-chain alkyl ionic liquid as a template agent, a NaY molecular sieve having a high crystallinity may be obtained and the backbone of the molecular sieve has a silica-to-alumina ratio of 6 or more. The present invention has been established based on these findings.

To this end, the present invention provides a method for preparing a NaY molecular sieve having a high silica-to-alumina ratio, characterized in that the method comprises the steps of:

a) mixing deionized water, a silicon source, an aluminum source, an alkali source, and ILs as a template agent to obtain an initial gel mixture;
b) maintaining the initial gel mixture obtained in step a) at a temperature of no more than 50°C, and stirring and aging for 1-100 hours to obtain a homogeneous gel mixture;
c) feeding the homogeneous gel mixture obtained in step b) into a high pressure synthesis kettle, closing the kettle, and increasing the temperature to 70-130°C, and allowing crystallization to be conducted under an autogenic pressure for 3-30 days; and
d) after the crystallization is complete, separating the solid product, washing with deionized water to neutral and drying, to obtain the NaY molecular sieve having a high silica-to-alumina ratio,

wherein the obtained NaY molecular sieve has a silica-to-alumina ratio of 6 or more, and the ILs is a short-chain alkylimidazolium ionic liquid, wherein the short-chain alkylimidazolium ionic liquid is any one or a mixture of two or more of 1-ethyl-3-methylimidazolium bromide, 1-allyl-3-methylimidazolium bromide, 1-butyl-3-methylimidazolium bromide, 1-ethyl-3-methylimidazolium chloride, 1-allyl-3-methylimidazolium chloride, and 1-butyl-3-methylimidazolium chloride, and wherein the initial gel mixture obtained in the step a) has the following molar ratios:

$SiO_2/Al_2O_3$ = 6-20;
$Na_2O/Al_2O_3$ = 1-8;
$H_2O/Al_2O_3$ = 100-400; and
$ILs/Al_2O_3$ = 0.1-6,

wherein the silicon source is based on $SiO_2$, the aluminum source is based on $Al_2O_3$, and the alkali source is based on $Na_2O$.

In one preferred embodiment, the silicon source used in the step a) is any one or a mixture of two or more of a silica sol, an activated silica, and an orthosilicate; the aluminum source is any one or a mixture of two or more of sodium aluminate, an activated alumina, and an aluminum alkoxide; and the alkali source is sodium hydroxide.

In one preferred embodiment, the aging temperature is 10-50°C and the aging time is 8-72 hours in the step b).

In one preferred embodiment, the temperature for crystallization is 80-110°C and the crystallization time is 8-24 days in the step c).

In one preferred embodiment, the crystallization process in the step c) is performed in a static or dynamic state.

The present invention also provides an as-synthesized molecular sieve having a high silica-to-alumina ratio prepared by the method described above, characterized in that the NaY molecular sieve has a silica-to-alumina ratio of 6 or more.

The advantageous effects of the present invention include, but are not limited to, obtaining a NaY molecular sieve having a silica-to-alumina ratio of 6 or more by using a specific short-chain alkylimidazolium ionic liquid as a template agent.

## DESCRIPTION OF DRAWINGS

Fig. 1 is an XRD pattern of the product synthesized according to Example 1 of the present invention.

Fig. 2 is a scanning electron microscope (SEM) image of the product synthesized according to Example 1 of the present invention.

Fig. 3 is a silicon nuclear magnetic resonance ($^{29}$Si-NMR) spectrum of the product synthesized according to Example 1 of the present invention.

## DESCRIPTION OF EMBODIMENTS

In the present invention, a phase-pure NaY molecular sieve having a high silica-to-alumina ratio is synthesized under a hydrothermal condition by using a short-chain alkylimidazolium ionic liquid as a template agent or a structure directing agent and mixing an appropriate silicon source, an appropriate aluminum source, and an appropriate alkali source in deionized water.

In one preferred embodiment, the method for preparing a NaY molecular sieve having a high silica-to-alumina ratio (the silica-to-alumina ratio is 6 or more) of the present invention comprises the following steps:

a) mixing deionized water, a silicon source, an aluminum source, an alkali source, and a template agent at a certain ratio to obtain an initial gel mixture, wherein the initial gel mixture has the following molar ratios:

$SiO_2/Al_2O_3$ = 6-20;
$Na_2O/Al_2O_3$ = 1-8;
$H_2O/Al_2O_3$ = 100-400; and
$ILs/Al_2O_3$ = 0.1-6, wherein ILs is a short-chain alkylimidazolium ionic liquid, the silicon source is based on $SiO_2$, the aluminum source is based on $Al_2O_3$, and the alkali source is based on $Na_2O$.

b) maintaining the initial gel mixture obtained in step a) under a condition of no more than 50°C, and stirring and aging for 1-100 hours to obtain a homogeneous gel mixture;

c) feeding the homogeneous gel mixture obtained in step b) into a high pressure synthesis kettle, closing the kettle, increasing the temperature to 70-130°C, and allowing crystallization to be conducted under an autogenic pressure for 3-30 days; and

d) after the crystallization is complete, separating the solid product, washing with deionized water to neutral and drying, to obtain the high-silicon NaY molecular sieve.

The short-chain alkylimidazolium ionic liquid used in the step a) is any one of or a mixture of two or more of 1-ethyl-3-methylimidazolium bromide ([Emim]Br), 1-allyl-3-methylimidazolium bromide ([Amim]Br), 1-butyl-3-methylimidazolium bromide ([Bmim]Br), 1-ethyl-3-methylimidazolium chloride ([Emim]Cl), 1-allyl-3-methylimidazolium chloride ([Amim]Cl), and 1-butyl-3-methylimidazolium chloride ([Bmim]Cl).

Preferably, the silicon source used in the step a) is any one of or a mixture of two or more of a silica sol, an activated silica, and an orthosilicate; the aluminum source is any one of or a mixture of two or more of sodium aluminate, an activated alumina, or an aluminum alkoxide; and the alkali source is sodium hydroxide.

Preferably, in the initial gel mixture of the step a), $SiO_2/Al_2O_3$ = 10-18.

Preferably, in the initial gel mixture of the step a), $Na_2O/Al_2O_3$=2-6.

Preferably, in the initial gel mixture of the step a), $H_2O/Al_2O_3$ = 180-300.

Preferably, in the initial gel mixture of the step a), $ILs/Al_2O_3$ = 0.5-5.

Preferably, the aging temperature is 10-50°C and the aging time is 8-72 hours in the step b).

Preferably, the crystallization temperature is 80-110°C and the crystallization time is 8-24 days in the step c).

Preferably, the crystallization process in the step c) is performed in a static or dynamic state.

In the present invention, the X-ray powder diffraction phase analysis (XRD) of the product is carried out on X'Pert PRO X-ray diffractometer of PANalytical Corporation, Netherlands, using a Cu target, Kα radiation source (λ=0.15418 nm), a voltage of 40 KV, and a current of 40 mA. The relative crystallinity of the product is calculated based on the sum of XRD peak intensities of crystal planes 111, 331, 533. By comparing to the crystallinity of the sample in Example 1, which is 100%, the relative crystallinities of other samples are obtained.

In the present invention, SU8020 scanning electron microscope of Hitach is used in SEM morphologic analysis of the product.

In the present invention, the silica-to-alumina ratio of the product is measured by using Magix 2424 X-ray fluorescence analyzer (XRF) of Philips Corporation.

In the present invention, Infinity plus 400WB solid nuclear magnetic resonance spectrum analyzer of Varian Corporation, U.S., is used in silicon nuclear magnetic resonance ($^{29}$Si MAS NMR) analysis of the product, with a BBO MAS probe and an operational magnetic field strength of 9.4T. The silica-to-alumina ratio of the product may also be calculated from the result of $^{29}$Si MAS NMR, and the equation is as follows:

$$\text{NMR } SiO_2/Al_2O_3 = 8 * (S_{Q0} + S_{Q1} + S_{Q2} + S_{Q3} + S_{Q4})/(S_{Q1} + 2S_{Q2} + 3S_{Q3} + 4S_{Q4})$$

wherein Qi represents the difference in the number of aluminum atoms surrounding a silicon-oxygen tetrahedron ($SiO_4$) (i=0, 1, 2, 3, 4), and $S_{Qi}$ represents a corresponding peak area of Qi on the silicon nuclear magnetic resonance spectrum.

The present invention will be described in detail below by Examples, but the present invention is not limited to these Examples.

### Example 1

Types and molar amounts for respective raw materials, crystallization temperatures and crystallization times, crystal forms, relative crystallinities, and silica-to-alumina ratios ($SiO_2/Al_2O_3$) determined by XRF and NMR were shown in the following Table 1.

In Example 1, the formulating process was as follows: 1.94 g of 1-ethyl-3-methylimidazolium bromide ([Emim] Br) and 1.19 g of sodium hydroxide were dissolved in 23g of deionized water, to which 2g of sodium aluminate (the content percentage by mass of $Al_2O_3$ was 52%) was then added, and they were stirred until a clarified liquid is obtained; then 24.48 g of silica sol (the content percentage by mass of $SiO_2$ was 30.45%) was further added to obtain an initial gel mixture. This initial gel mixture was stirred at room temperature for 24 hours to produce a homogeneous gel mixture; and this homogeneous gel mixture was transferred to a stainless high pressure synthesis kettle. At this time, molar ratio of respective components in the synthesis system is 1.0[Emim]Br:12$SiO_2$:1$Al_2O_3$:3.2$Na_2O$:220$H_2O$.

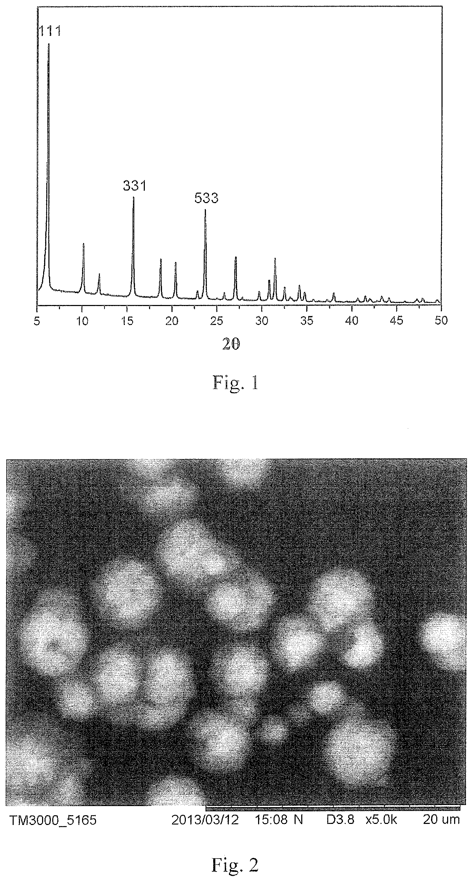

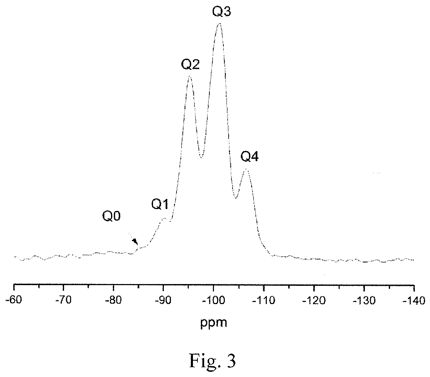

The high pressure synthesis kettle was closed and placed in an oven of which the temperature had been increased to a constant temperature of 110°C, and static crystallization was performed at an autogenic pressure for 14 days. After the crystallization was complete, the solid product was separated by centrifugation, washed with deionized water to neutral, and then dried in air at 100°C to obtain a raw powder. The sample of this raw powder was taken for XRD analysis, and the result thereof was shown in Fig.1 and Table 2; the scanning electron microscope (SEM) image of this sample was shown in Fig.2; and the silicon nuclear magnetic resonance ($^{29}$Si MAS NMR) spectrum of this sample was shown in Fig. 3. At the meanwhile, the silica-to-alumina ratio of the product was calculated by XRF and silicon nuclear magnetic resonance spectrum, respectively. By summarizing the results of the analyses described above, it was indicated and determined that the synthesized product was a NaY molecular sieve having a silica-to-alumina ratio of greater than 6.

### Examples 2-24

Types and amounts of the materials used, and reaction conditions as well as analytical results were shown in the following Table 1, and the processes for synthesis and analysis were the same as those of Example 1.

The synthesized samples were subjected to XRD analysis, and data results thereof were similar to those in Table 2. That is, the positions and shapes of peaks were the same, and relative peak intensities fluctuated in a range of ±20% according to the change of the synthesis conditions. It was demonstrated that the synthetic product had the characteristics of a NaY molecular sieve structure. Other analytical results of these samples were shown in the following Table 1.

### Comparative Example

Types and amounts of the materials used, and reaction conditions as well as analytical results were shown in the following Table 1, and the processes for synthesis and analysis were the same as those of Example 1, except for using 0.1 mol of triethylamine as a template agent. The obtained sample was subjected to XRD analysis, and the data thereof demonstrated that the synthesized product had the structural characteristics of a NaY molecular sieve. Other analytical results of this sample were shown in the following Table 1.

Table 1

| Example | Type and amount of template agent | Aluminum source and moles of $Al_2O_3$ contained | Silicon source and moles of $SiO_2$ contained | Alkali source and moles of $Na_2O$ contained | $H_2O$ | Crystallization temperature (°C) | Crystallization time (day) | Crystal form | Relative crystallinity (%) | XRF ($SiO_2/Al_2O_3$) | NMR ($SiO_2/Al_2O_3$) |
|---|---|---|---|---|---|---|---|---|---|---|---|
| 1 | [Emim]Br 0.1 mol | Sodium aluminate 0.10 mol | Silica sol 1.2 mol | 0.32mol | 22mol | 110 | 14 | NaY | 100 | 7.2 | 6.8 |
| 2 | [Bmim]Br 0.1 mol | Sodium aluminate 0.10 mol | Silica sol 1.2 mol | 0.32mol | 22mol | 110 | 14 | NaY | 100 | 7.1 | 6.8 |
| 3 | [Amim]Br 0.1 mol | Sodium aluminate 0.10 mol | Silica sol 1.2 mol | 0.32mol | 22mol | 110 | 14 | NaY | 100 | 6.9 | 6.7 |
| 4 | [Emim]Cl 0.1 mol | Sodium aluminate 0.10 mol | Silica sol 1.2 mol | 0.32mol | 22mol | 110 | 14 | NaY | 100 | 7.2 | 6.8 |
| 5 | [Bmim]Cl 0.1 mol | Sodium aluminate 0.10 mol | Silica sol 1.2 mol | 0.32mol | 22mol | 110 | 14 | NaY | 100 | 71 | 6.8 |
| 6 | [Amim]Cl 0.1 mol | Sodium aluminate 0.10 mol | Silica sol 1.2 mol | 0.32mol | 22mol | 110 | 14 | NaY | 100 | 6.9 | 6.7 |
| 7 | [Emim]Br 0.1 mol | Sodium aluminate 0.10 mol | Silica sol 0.6 mol | 0.32mol | 22mol | 110 | 14 | NaY | 100 | 6.2 | 6.1 |
| 8 | [Bmim]Br 0.1 mol | Sodium aluminate 0.10 mol | Silica sol 0.6 mol | 0.32mol | 22mol | 110 | 14 | NaY | 100 | 6.1 | 6.0 |
| 9 | [Amim]Br 0.1 mol | Sodium aluminate 0.10 mol | Silica sol 0.6 mol | 0.32mol | 22mol | 110 | 14 | NaY | 100 | 6.3 | 6.2 |

| Example | Type and amount of template agent | Aluminum source and moles of Al$_2$O$_3$ contained | Silicon source and moles of SiO$_2$ contained | Alkali source and moles of Na$_2$O contained | H$_2$O | Crystallization temperature (°C) | Crystallization time (day) | Crystal form | Relative crystallinity (%) | XRF (SiO$_2$/Al$_2$O$_3$) | NMR (SiO$_2$/Al$_2$O$_3$) |
|---|---|---|---|---|---|---|---|---|---|---|---|
| 10 | [Emim]Br 0.1 mol | Sodium aluminate 0.10 mol | Silica sol 2.0 mol | 0.50mol | 22mol | 110 | 14 | NaY | 100 | 7.2 | 6.8 |
| 11 | [Bmim]Br 0.1 mol | Sodium aluminate 0.10 mol | Silica sol 2.0 mol | 0.50mol | 22mol | 110 | 14 | NaY | 100 | 7.3 | 6.9 |
| 12 | [Amim]Br 0.1 mol | Sodium aluminate 0.10 mol | Silica sol 2.0 mol | 0.50mol | 22mol | 110 | 14 | NaY | 100 | 7.1 | 6.7 |
| 13 | [Emim]Br 0.1 mol | Sodium aluminate 0.10 mol | Activated silica 1.2 mol | 0.32mol | 22mol | 110 | 14 | NaY | 95 | 7.1 | 6.7 |
| 14 | [Bmim]Br 0.1 mol | Sodium aluminate 0.10 mol | Activated silica 12 mol | 0.32mol | 22mol | 110 | 14 | NaY | 95 | 7.0 | 6.6 |
| 15 | [Amim]Br 0.1 mol | Sodium aluminate 0.10 mol | Activated silica 1.2 mol | 0.32mol | 22mol | 110 | 14 | NaY | 90 | 6.9 | 6.7 |
| 16 | [Emim]Br 0.1 mol | Activated alumina 0.10 mol | Silica sol 1.2 mol | 0.32mol | 22mol | 110 | 14 | NaY | 100 | 6.4 | 6.2 |
| 17 | [Bmim]Br 0.1 mol | Activated alumina 0.10 mol | Silica sol 1.2 mol | 0.32mol | 22mol | 110 | 14 | NaY | 95 | 6.6 | 6.4 |
| 18 | [Amim]Br 0.1 mol | Activated alumina 0.10 mol | Silica sol 1.2 mol | 0.32mol | 22mol | 110 | 14 | NaY | 90 | 6.5 | 6.2 |

(continued)

| Example | Type and amount of template agent | Aluminum source and moles of $Al_2O_3$ contained | Silicon source and moles of $SiO_2$ contained | Alkali source and moles of $Na_2O$ contained | $H_2O$ | Crystallization temperature (°C) | Crystallization time (day) | Crystal form | Relative crystallinity (%) | XRF ($SiO_2/Al_2O_3$) | NMR ($SiO_2/Al_2O_3$) |
|---|---|---|---|---|---|---|---|---|---|---|---|
| 19 | [Emim]Br 0.1 mol | Sodium aluminate 0.10 mol | Silica sol 1.2 mol | 0.32mol | 22mol | 70 | 30 | NaY | 80 | 6.2 | 6.0 |
| 20 | [Bmim]Br 0.1 mol | Sodium aluminate 0.10 mol | Silica sol 1.2 mol | 0.32mol | 22mol | 70 | 30 | NaY | 85 | 6.1 | 6.0 |
| 21 | [Amim]Br 0.1 mol | Sodium aluminate 0.10 mol | Silica sol 1.2 mol | 0.32mol | 22mol | 70 | 30 | NaY | 80 | 6.2 | 6.1 |
| 22 | [Emim]Br 0.1 mol | Sodium aluminate 0.10 mol | Silica sol 1.3 mol | 0.32mol | 22mol | 130 | 3 | NaY | 95 | 7.5 | 7.2 |
| 23 | [Bmim]Br 0.1 mol | Sodium aluminate 0.10 mol | Silica sol 1.2 mol | 0.32mol | 22mol | 130 | 3 | NaY | 95 | 7.4 | 7.1 |
| 24 | [Amim]Br 0.1 mol | Sodium aluminate 0.10 mol | Silica sol 1.2 mol | 0.32mol | 22mol | 130 | 3 | NaY | 95 | 7.6 | 7.3 |
| Comparative Example | Triethylamine 0.1 mol | Sodium aluminate 0.10 mol | Silica sol 1.2mol | 0.32mol | 22mol | 100 | 7 | NaY | 70 | 5.4 | 5.1 |

**Table 2: XRD result of the sample of Example 1**

| No. | 2θ | d(Å) | 100×I/I⁰ |
|---|---|---|---|
| 1 | 6.2041 | 14.24645 | 100 |
| 2 | 10.1409 | 8.72289 | 20.15 |
| 3 | 11.8975 | 7.4387 | 8.47 |
| 4 | 15.6692 | 5.6556 | 40.16 |
| 5 | 18.7069 | 4.74353 | 15.78 |
| 6 | 20.3883 | 4.35596 | 14.41 |
| 7 | 22.8253 | 3.8961 | 3.26 |
| 8 | 23.6769 | 3.75787 | 36.24 |
| 9 | 25.0092 | 3.56062 | 0.44 |
| 10 | 25.8118 | 3.4517 | 2.89 |
| 11 | 27.0779 | 3.29311 | 17.44 |
| 12 | 27.7943 | 3.20983 | 1.11 |
| 13 | 29.6723 | 3.01082 | 3.78 |
| 14 | 30.7843 | 2.90455 | 8.7 |
| 15 | 31.4336 | 2.84602 | 17.04 |
| 16 | 32.4937 | 2.75555 | 5.67 |
| 17 | 33.1205 | 2.70482 | 1.83 |
| 18 | 34.1286 | 2.6272 | 6.5 |
| 19 | 34.7195 | 2.58383 | 3.64 |
| 20 | 35.7076 | 2.51456 | 0.89 |
| 21 | 37.2197 | 2.4158 | 0.79 |
| 22 | 37.9445 | 2.37131 | 3.64 |
| 23 | 39.3958 | 2.28723 | 0.34 |
| 24 | 40.6107 | 2.22157 | 1.61 |
| 25 | 41.4555 | 2.17823 | 2.56 |
| 26 | 41.9693 | 2.15275 | 1.41 |
| 27 | 42.8121 | 2.1123 | 0.67 |
| 28 | 43.2876 | 2.0902 | 2.43 |
| 29 | 44.1074 | 2.05323 | 1.93 |
| 30 | 45.8438 | 1.97942 | 0.44 |
| 31 | 47.2353 | 1.92431 | 1.46 |
| 32 | 47.8334 | 1.90163 | 1.63 |
| 33 | 49.4874 | 1.84188 | 1 |

It can be seen from the results of above Table 1 and Table 2 that with respect to the NaY molecular sieve synthesized by the method of the present invention, the silica-to-alumina ratio of each of molecular sieve samples in Examples 1-24, either a silica-to-alumina ratio of the product determined by XRF method or a silica-to-alumina ratio of the backbone of the product determined by silicon nuclear magnetic resonance spectrum data, is remarkably higher than the silica-to-alumina ratio of the molecular sieve sample obtained in Comparative Example. On the one hand, it is indicated that in the case of using a conventional amine as a template agent, the silica-to-alumina ratio of the resultant sample is relatively low and is difficult to reach 6, and the crystallinity is relatively low; and on the other hand, it is indicated that in the case of using a short-chain alkylimidazolium ionic liquid as a template agent, the silica-to-alumina ratio of the resultant product is 6 or more, or even higher, and the crystallinity is high. The use of this NaY molecular sieve having a high crystallinity and a high silica-to-alumina ratio can significantly improve the catalytic cracking in terms of activity, stability, and the like.

**Claims**

1. A method for preparing a NaY molecular sieve having a high silica-to-alumina ratio, **characterized in that** the method comprises the steps of:

   a) mixing deionized water, a silicon source, an aluminum source, an alkali source, and ILs as a template agent to obtain an initial gel mixture;
   b) maintaining the initial gel mixture obtained in step a) at a temperature of no more than 50°C, and stirring and aging for 1-100 hours to obtain a homogeneous gel mixture;
   c) feeding the homogeneous gel mixture obtained in step b) into a high pressure synthesis kettle, closing the kettle, increasing the temperature to 70-130°C, and allowing crystallization to be conducted under an autogenic pressure for 3-30 days; and
   d) after the crystallization is complete, separating the solid product, washing with deionized water to neutral and drying, to obtain the NaY molecular sieve having a high silica-to-alumina ratio,

   wherein the obtained NaY molecular sieve has a silica-to-alumina ratio of 6 or more, and the ILs is a short-chain alkylimidazolium ionic liquid, wherein the short-chain alkylimidazolium ionic liquid is any one of or a mixture of two or more of 1-ethyl-3-methylimidazolium bromide, 1-allyl-3-methylimidazolium bromide, 1-butyl-3-methylimidazolium bromide, 1-ethyl-3-methylimidazolium chloride, 1-allyl-3-methylimidazolium chloride, and 1-butyl-3-methylimidazolium chloride,
   and wherein the initial gel mixture obtained in the step a) has the following molar ratios:

   $SiO_2/Al_2O_3$ = 6-20;
   $Na_2O/Al_2O_3$ = 1-8;
   $H_2O/Al_2O_3$ = 100-400; and
   $ILs/Al_2O_3$ = 0.1-6,

   wherein the silicon source is based on $SiO_2$, the aluminum source is based on $Al_2O_3$, and the alkali source is based on $Na_2O$.

2. The method according to claim 1, **characterized in that** the silicon source used in the step a) is any one of or a mixture of two or more of a silica sol, an activated silica, and an orthosilicate; the aluminum source is any one or a mixture of two or more of sodium aluminate, an activated alumina, and an aluminum alkoxide; and the alkali source is sodium hydroxide.

3. The method according to claim 1, **characterized in that** the aging temperature is 10-50°C and the aging time is 8-72 hours in the step b).

4. The method according to claim 1, **characterized in that** the temperature for crystallization is 80-110°C and the crystallization time is 8-24 days in the step c).

5. The method according to claim 1, **characterized in that** the crystallization process in the step c) is performed in a static or dynamic state.

6. An as-synthesized NaY molecular sieve having a high silica-to-alumina ratio prepared by the method according to any one of claims 1-5, **characterized in that** the as-synthesized NaY molecular sieve has a silica-to-alumina ratio of 6 or more.

**EP 3 081 532 B1**

## Patentansprüche

1. Verfahren zur Herstellung eines NaY-Molekularsiebs mit einem hohen Siliziumdioxid/Aluminiumoxid-Verhältnis, **dadurch gekennzeichnet, dass** das Verfahren die folgenden Schritte umfasst:

   a) Mischen von deionisiertem Wasser, einer Siliziumquelle, einer Aluminiumquelle, einer Alkaliquelle und ILs als Template-Mittel, um eine erste Gelmischung zu erhalten;
   b) Halten der in Schritt a) erhaltenen anfänglichen Gelmischung bei einer Temperatur von nicht mehr als 50°C und Rühren und Altern für 1-100 Stunden, um eine homogene Gelmischung zu erhalten;
   c) Zuführen der in Schritt b) erhaltenen homogenen Gelmischung in einen Hochdruck-Synthesekessel, Schließen des Kessels, Erhöhen der Temperatur auf 70-130°C und Durchführen der Kristallisation unter einem autogenen Druck für 3-30 Tage; und
   d) nach Abschluss der Kristallisation, Abtrennen des festen Produkts, Waschen mit deionisiertem Wasser zum Neutralisieren und Trocknen, um das NaY-Molekularsieb mit einem hohen Siliziumdioxid/Aluminiumoxid-Verhältnis zu erhalten,

   wobei das erhaltene NaY-Molekularsieb ein Siliziumdioxid/Aluminiumoxid-Verhältnis von 6 oder mehr aufweist, und die ILs eine kurzkettige Alkylimidazollonenflüssigkeit sind, wobei die kurzkettige Alkylimidazol-Ionenflüssigkeit eine beliebige von, oder eine Mischung aus, zwei oder mehreren der folgenden ist: 1-Ethyl-3-methylimidazolbromid, 1-Allyl-3-methylimidazolbromid, 1-Butyl-3-methylimidazolbromid, 1-ethyl-3-methylimidazolchlorid, 1-Allyl-3-methylimidazolchlorid und 1-Butyl-3-methylimidazolchlorid,
   und wobei die in Schritt a) erhaltene anfängliche Gelmischung die folgenden Molverhältnisse aufweist:

   $SiO_2/Al_2O_3$ = 6-20;
   $Na_2O/Al_2O_3$ = 1-8;
   $H_2O/Al_2O_3$ = 100-400; und
   $ILs/Al_2O_3$ = 0,1-6,

   wobei die Siliziumquelle auf $SiO_2$ basiert, die Aluminiumquelle auf $Al_2O_3$ basiert und die Alkaliquelle auf $Na_2O$ basiert.

2. Verfahren nach Anspruch 1, **dadurch gekennzeichnet, dass** die in Schritt a) verwendete Siliziumquelle eine beliebige von, oder eine Mischung aus, zwei oder mehreren der folgenden ist: einem Kieselsol, einer aktivierten Kieselsäure und einem Orthosilikat; die Aluminiumquelle eine beliebige von, oder eine Mischung aus, zwei oder mehreren der folgenden ist: Natriumaluminat, einem aktivierten Aluminiumoxid und einem Aluminiumalkoxid; und die Alkaliquelle Natriumhydroxid ist.

3. Verfahren nach Anspruch 1, **dadurch gekennzeichnet, dass** in Schritt b) die Alterungstemperatur 10-50°C und die Alterungszeit 8-72 Stunden beträgt.

4. Verfahren nach Anspruch 1, **dadurch gekennzeichnet, dass** in Schritt c) die Temperatur für die Kristallisation 80-110°C und die Kristallisationszeit 8-24 Tage beträgt.

5. Verfahren nach Anspruch 1, **dadurch gekennzeichnet, dass** der Kristallisationsprozess in Schritt c) in einem statischen oder dynamischen Zustand durchgeführt wird.

6. Synthetisiertes NaY-Molekularsieb mit einem hohen Siliziumdioxid/Aluminiumoxid-Verhältnis, hergestellt nach dem Verfahren nach einem der Ansprüche 1-5, **dadurch gekennzeichnet, dass** das synthetisierte NaY-Molekularsieb ein Siliziumdioxid/Aluminiumoxid-Verhältnis von 6 oder mehr aufweist.

## Revendications

1. Procédé de préparation d'un tamis moléculaire de NaY ayant un rapport silice-alumine élevé, **caractérisé en ce que** le procédé comprend les étapes qui consistent à :

   a) mélanger de l'eau désionisée, une source de silicium, une source d'aluminium, une source d'alcali, et un ILs comme agent servant de modèle pour obtenir un mélange de gel initial ;
   b) maintenir le mélange de gel initial obtenu à l'étape a) à une température ne dépassant pas 50 °C, et agiter et vieillir pendant 1 à 100 heures pour obtenir un mélange de gel homogène ;

c) introduire le mélange de gel homogène obtenu à l'étape b) dans une marmite de synthèse à haute pression, fermer la marmite, augmenter la température jusqu'à 70 à 130 °C, et laisser la cristallisation se dérouler sous pression autogène pendant 3 à 30 jours ; et

d) une fois la cristallisation terminée, séparer le produit solide, laver avec de l'eau désionisée jusqu'à l'obtention d'un produit neutre et sécher, pour obtenir le tamis moléculaire de NaY ayant un rapport silice-alumine élevé,

dans lequel le tamis moléculaire de NaY obtenu a un rapport silice-alumine de 6 ou plus, et l'ILs est un liquide ionique d'alkylimidazolium à chaîne courte, le liquide ionique d'alkylimidazolium à chaîne courte étant l'un quelconque ou un mélange de deux ou plus du bromure de 1-éthyl-3-méthylimidazolium, du bromure de 1-allyl-3-méthylimidazolium, du bromure de 1-butyl-3-méthylimidazolium, du chlorure de 1-éthyl-3-méthylimidazolium, du chlorure de 1-allyl-3-méthylimidazolium, et du chlorure de 1-butyl-3-méthylimidazolium, et dans lequel le mélange de gel initial obtenu à l'étape a) a les rapports molaires suivants :

$SiO_2/Al_2O_3$ = 6-20 ;
$Na_2O/Al_2O_3$ = 1-8 ;
$H_2O/Al_2O_3$ = 100-400 ; et
$ILs/Al_2O_3$ = 0,1-6,

dans lequel la source de silicium est à base de $SiO_2$, la source d'aluminium est à base de $Al_2O_3$, et la source d'alcali est à base de $Na_2O$.

2. Procédé selon la revendication 1, **caractérisé en ce que** la source de silicium utilisée à l'étape a) est l'un quelconque ou un mélange de deux ou plus d'un sol de silice, d'une silice activée, et d'un orthosilicate ; la source d'aluminium est l'un quelconque ou un mélange de deux ou plus d'un aluminate de sodium, d'une alumine activée, et d'un alcoxyde d'aluminium ; et la source d'alcali est de l'hydroxyde de sodium.

3. Procédé selon la revendication 1, **caractérisé en ce que** la température de vieillissement est de 10 à 50 °C et le temps de vieillissement est de 8 à 72 heures à l'étape b).

4. Procédé selon la revendication 1, **caractérisé en ce que** la température de cristallisation est de 80 à 110 °C et le temps de cristallisation est de 8 à 24 jours à l'étape c).

5. Procédé selon la revendication 1, **caractérisé en ce que** le processus de cristallisation à l'étape c) est réalisé dans un état statique ou dynamique.

6. Tamis moléculaire de NaY tel que synthétisé ayant un rapport silice-alumine élevé, préparé par le procédé selon l'une quelconque des revendications 1 à 5, **caractérisé en ce que** le tamis moléculaire de NaY tel que synthétisé a un rapport silice-alumine de 6 ou plus.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4333859 A
- US 4714601 A
- US 5273945 A
- US 4931267 A
- US 5718593 A
- CN 1736867 A

### Non-patent literature cited in the description

- **F. DELPRATO.** *Zeolites,* 1990, vol. 10, 546-552
- *Zeolites,* 1993, vol. 13, 122-127
- *Zeolites,* 1995, vol. 15, 90-96
- **F. DELPRATO.** *Zeolites,* 1993, vol. 13, 122-127
- **B. DE WITTE.** synthesized a high-silicon Y molecular sieve having a silica-to-alumina ratio of 6.2-6.6 by using inositol as a template agent. *Microporous and Mesoporous Materials,* 1998, vol. 23, 11-22